# EUROPEAN PATENT APPLICATION

(11) **EP 2 965 811 A1**
(43) Date of publication of application: **13.01.2016**
(21) Application number: 13876848.6
(22) Date of filing: 28.05.2013
(51) Int. Cl.: B01J 23/46, B01J 23/63, B01J 37/16, C01B 3/40

(54) **REFORMING CATALYST FOR HYDROCARBON COMPOUNDS, AND PRODUCTION METHOD THEREFOR**

(30) Priority: 07.03.2013 JP 2013045847
(71) Applicant: Osaka Gas Co., Ltd., Osaka-shi, Osaka 541-0046 (JP)
(72) Inventor: TAKAMI Susumu, Osaka-shi Osaka 541-0046 (JP); OHTSUKA Hirofumi, Osaka-shi Osaka 541-0046 (JP); HIRANO Takenori, Izumi-shi Kagoshima 899-0401 (JP)
(74) Representative: Lemcke, Brommer & Partner Patentanwälte Partnerschaft mbB
(86) International application number: PCT/JP2013/064770
(87) International publication number: WO 2014/136279

(57) **Abstract**

For implementing a reforming reaction such as steam reforming or autothermal reforming, to obtain hydrogen, carbon monoxide, carbon dioxide, methane, etc. by bringing hydrocarbons and steam into contact with a reforming catalyst, an arrangement is provided to enable reforming of the hydrocarbon to proceed under a stable condition for an extended period thanks to high sulfur resistance thereof. The arrangement employs a reforming catalyst supporting both platinum and iridium on an inorganic oxide support for the reforming of the hydrocarbon.

## Description

### Technical Field:

The present disclosure relates to a reforming catalyst such as a steam reforming catalyst, an autothermal reforming catalyst for hydrocarbons and also to a method of its manufacture. More particularly, the disclosure relates to a reforming catalyst having high sulfur poisoning resistance suitable for use in converting in particular a hydrocarbon containing sulfur into a mixture gas containing carbon monoxide and hydrogen through a reforming reaction. The disclosure relates also to a method of manufacturing such reforming catalyst a steam reforming method and an autothermal reforming method for hydrocarbons, with using the catalyst.

### Background Art

In the art of hydrogen production process, a reforming technique of using so-called hydrocarbons in which a hydrocarbon is reacted with steam to obtain hydrogen, carbon monoxide, carbon dioxide, methane occupies the most important position.

As examples of reforming technique, so-called steam reforming and autothermal reforming are known. These will be explained next one by one.

### [Steam Reforming]

In a steam reforming reaction, steam is reacted with hydrocarbon gas via a steam reforming catalyst to obtain hydrogen, carbon monoxide, carbon dioxide as produced gases. As a catalyst for use in the steam reforming, there is known a steam reforming catalyst comprising a precious metal such as ruthenium, platinum, iridium, palladium, rhodium, etc. supported on an inorganic oxide such as alumina. However, it is well-known that such steam reforming catalyst suffers significant decrease in its activity due to presence of sulfur.

For the purpose of prevention of such catalyst degradation due to sulfur, it is conceivable to reduce a sulfur concentration as low as possible through a desulfurization purification of raw materials. However, there is imposed a limit in the degree of sulfur concentration reduction possible, relative to the cost of desulfurization purification. Thus, there is a need for a different solution.

Then, as described above, attempts have been made to improve the catalyst per se for achieving higher sulfur resistance. As one example of such attempt, Patent Document 1 discloses: "a highly active steam reforming catalyst having sulfur resistance, comprising platinum, palladium or iridium supported on a substantially lanthanum-stabilized, alumina substrate material or an alumina substrate stabilized with lanthanum using magnesium as a co-catalyst".

Further, Patent Document 2 discloses that "a catalyst containing at least one kind of active metal selected from the group consisting of iridium, platinum and palladium, supported on a catalyst support of at least one of monoclinic zirconia and alkaline earth metal hexaaluminate" exhibits sulfur resistance. Further, Prior-Art Document 3 describes "a steam reforming catalyst for sulfur-containing hydrocarbon comprising ruthenium and at least one kind of non-ruthenium metal selected from Group 8 metals in the Periodic Table, supported on a support". Moreover, Prior-Art Document 4 describes "a catalyst for producing hydrogen by reforming a hydrocarbon, comprising (i) a rhodium-containing substance or iridium-containing substance, (ii) a nickel-containing substance, (iii) a substance containing at least one kind of metal selected from Group 6B, Group 7B and Group 8 metals in the Periodic Table, and (iv) a substance containing a Group 1a metal or Group 11a metal in the Periodic Table, all supported on a zirconia-based or alumina-based support and a hydrogen producing catalyst added with a substance selected from the lanthanide group metals".

### [Autothermal Reforming]

Autothermal reforming reaction is a reaction in which via an autothermal catalyst, a hydrocarbon is subjected simultaneously to an endothermic reaction for obtaining a produced gas through the above-described steam reforming reaction and to an exothermic reaction for obtaining a produced gas through a partial oxidization reaction, thus obtaining hydrogen, carbon monoxide, carbon dioxide, methane from the hydrocarbon autonomously. This reaction involves a process common to the steam reforming reaction, but involves also a partial oxidization reaction. Therefore, as for the properties for its catalyst, it is required that its properties allow the steam reforming reaction and be not changed significantly even with implementation of the partial oxidization reaction.

As the catalyst used, there are known the above-described catalysts comprising a precious metal such as ruthenium, platinum, iridium, palladium, rhodium, etc. supported on an inorganic oxide such as alumina. And, it is also well-known that these catalysts for implementing the steam reforming reaction suffer significant decrease in their activities in the presence of sulfur.

In the case of implementation of an autothermal reaction too, for the purpose of prevention of catalyst degradation due to sulfur, it is conceivable to reduce a sulfur concentration as much as possible through a desulfurization purification of raw materials. However, there is imposed a limit in the degree of sulfur concentration reduction possible, relative to the cost of desulfurization purification. Thus, there is a need for different solution.

Then, attempts have been made to improve the catalyst per se for achieving higher sulfur resistance. As one example of such attempt, Patent Document 1 discloses: "a highly active steam reforming catalyst having sulfur resistance, comprising platinum, palladium or iridium supported on a substantially lanthanum-stabilized, alumina substrate material or an alumina substrate stabilized with lanthanum using magnesium as a co-catalyst".

Further, Prior-Art Document 4 describes "a catalyst for manufacturing hydrogen by reforming a hydrocarbon, comprising (i) a rhodium-containing substance or iridium-containing substance, (ii) a nickel-containing substance, (iii) a substance containing at least one kind of metal selected from the Group 6B, Group 7B and Group 8 metals in the Periodic Table, and (iv) a substance containing a Group 1a metal or Group 11a metal in the Periodic Table, all supported on a zirconia-based or alumina-based support and a hydrogen producing catalyst added with a substance selected from the lanthanide group metals".

### Prior-Art Documents

### Patent Documents:

Patent Document 1: Japanese Unexamined Patent Application Publication No. 62-262746
Patent Document 2: Japanese Translation of PCT International Application Publication No. 2007-532305
Patent Document 3: Japanese Unexamined Patent Application Publication No. 2004-082033
Patent Document 4: Japanese Unexamined Patent Application Publication No. 2007-054721

### Summary

### Problem to be Solved by Invention

However, it can hardly be said that even with the techniques disclosed in these documents, sufficient sulfur resistance has been achieved yet. Thus, there is a need for further improvement. For that matter, the above documents fail to disclose any example using specifically platinum and iridium in combination as a steam reforming catalyst for hydrocarbons. In particular, the above-described Patent Document 1 refers to the sulfur resistance of iridium and describes that no benefit will be obtained when iridium is used in combination with any other metal.

In view of the above-described situation, the present inventors have conducted extensive and intensive research and discovered with respect to steam reforming catalysts that in spite of the above description in Patent Document 1, when platinum and iridium are supported via impregnation on an inorganic oxide support, it is possible to achieve high sulfur resistance of platinum while maintaining the high performance of iridium as a steam reforming catalyst, thus completing the present invention. The inventors have also made a new finding with respect to the autothermal catalysts that the steam reforming catalyst obtained as above can be used advantageously as an autothermal reforming catalyst also.

Namely, the object of the present disclosure is to provide a reforming catalyst for hydrocarbons having high sulfur resistance and a method of its manufacture.

### Solution

### [Configuration 1]

A characterizing feature of a reforming catalyst for hydrocarbons relating to this disclosure resides in that both platinum and iridium are supported on an inorganic oxide support.

### [Function/Effect 1]

Based on the findings made by the present inventors, although it was conventionally believed, based on Patent Document 1, that sulfur resistance cannot be achieved originally by a catalyst having platinum and iridium both supported on an inorganic oxide support, the present inventors' own confirmation surprisingly showed that contrary to the description in Patent Document 1, a catalyst having both platinum and iridium supported on an inorganic oxide support can provide high sulfur resistance and high reforming activity (methane conversion) in compatibility with each other as shown by examples to be described later herein.

Although not being wished to be limited to any particular theory, the above can be explained as follows.

Platinum and iridium are metals listed adjacently in the Periodic Table, so it can be assumed that these together form a very stable alloy. On the other hand, platinum has a property of hardly forming any compound with sulfur. Accordingly, in particular, in the reforming catalyst comprising platinum and iridium being supported on an inorganic oxide support, the favorable properties of the respective metals can be stably obtained in the alloy or composite thereof, thus showing high resistance for sulfur while maintaining a relatively high reforming activity.

### [Configuration 2]

The inorganic oxide support above can contain as its principal component, one or more kinds selected from the group consisting of α-alumina, zirconia and titania.

### [Function/Effect 2]

As the inorganic oxide support, selection thereof can be made from α-alumina, γ-alumina, zirconia, titania and mixtures thereof. Among these, α-alumina, zirconia and titania have high heat resistance particularly, so it can be said that these can be suitably used in the reforming catalyst for hydrocarbons proposed by the present disclosure that are assumed to be used for a long period under a heated condition.

Further, as shown in the examples described later, it has been found that a reforming catalyst for hydrocarbons using zirconia has an especially high activity, thus preferred particularly.

### [Configuration 3]

Further, relative to the inorganic oxide support, platinum can be supported from 0.5 mass % to 2 mass %.

### [Function/Effect 3]

Respecting platinum to be supported on the inorganic oxide support, if too little, it will show only less effect, whereas, if too much, it will result that its effect relative to the support amount will become saturated, thus becoming economically unjustifiable. In the present disclosure, it has been found that its percentage of 0.5 mass % or more will provide both sufficiently high methane conversion and high sulfur resistance. And, it has also been found that even with the economically justifiable upper limit concentration of 2 mass% recited above, both high methane conversion and high sulfur resistance can still be obtained. Based these, it can be understood that the percentage ranges preferably from 0.5 mass % to 2 mass %. Still preferably, the percentage ranges preferably from 0.5 mass % to 1 mass %.

### [Configuration 4]

Further, relative to the inorganic oxide support, iridium can be supported from 0.5 mass % to 2 mass %.

### [Function/Effect 4]

Respecting iridium to be supported on the inorganic oxide support also, if too little, it will show only less effect, whereas, if too much, it will result that its effect relative to the support amount will become saturated, thus becoming economically unjustifiable. In the present disclosure, it has been found that its percentage of 0.5 mass % or more will provide both sufficiently high methane conversion and high sulfur resistance. And, it has also been found that even with the economically justifiable upper limit concentration of 2 mass% recited above, both high methane conversion and high sulfur resistance can still be obtained. Based these, it can be understood that the percentage ranges preferably from 0.5 mass % to 2 mass %. Still preferably, the percentage ranges preferably from 0.5 mass % to 1 mass %.

### [Configuration 5]

Further, the inorganic oxide support can be caused to contain a lanthanide oxide component in advance.

### [Function/Effect 5]

The findings made by the present inventors have also showed that the inorganic metal oxide support can achieve a particularly high activity when containing a lanthanide oxide component in advance, as shown in the examples described later.

Although not being wished to be limited to any particular theory, the above can be explained as follows.

Lanthanide elements show high affinity with both the inorganic oxide support and the active metals (platinum and iridium). Therefore, they can increase dispersibilities of the active metals relative to the inorganic oxide support and they also have higher absorbabilities to sulfur than the active metals. Based on these, it is believed that they contribute to inhibition of absorption of sulfur to the active metals.

Therefore, by causing the inorganic oxide support to contain a lanthanide oxide in advance, a high methane conversion and high sulfur resistance can be obtained in compatibility with each other.

Based on the foregoing, it is possible to implement a steam reforming method for obtaining a produced gas containing hydrogen and carbon monoxide by bringing the "reforming catalyst for hydrocarbons" described in any one of the above [Configurations 1-5] into contact with steam. Further, it is also possible to implement an autothermal reforming method for obtaining a produced gas containing hydrogen and carbon monoxide by bringing the "reforming catalyst for hydrocarbons" described in any one of the above [Configurations 1-5] into contact with steam, thereby to cause a steam reforming reaction and a partial oxidization reaction.

As some examples of the hydrocarbons for use as raw materials in the present disclosure, natural gas, ethane, propane, butane, LPG (liquefied petroleum gas), naphtha, coke-oven gas, various kinds of city gas can be cited.

The conditions for use in the steam reforming reaction are not particularly limited. However, a reaction temperature ranging from 300°C to 800°C, a molar ratio ranging from 1 to 5 for carbon contained in the raw material hydrocarbon relative to water (steam) are preferred. And, in addition, hydrogen can be added by 0.5 vol.% to 10 vol.%.

As for the autothermal reaction, though not being limited thereto, in addition to the above-mentioned conditions for the steam reforming reaction, an oxygen containing as such as air will be added such that a molar ratio ranging for carbon contained in the raw material hydrocarbon relative to oxygen may range from 0.1 to 1.

### [Configuration 6]

A characterizing feature of a method of manufacturing a steam reforming catalyst for hydrocarbon relating to this disclosure resides in that after platinum salt and iridium salt are impregnated in an inorganic oxide support, the resultant mixture is subjected to a liquid-phase reducing treatment with hydrazine, thereby to cause platinum and iridium to be supported on the inorganic oxide support.

### [Function/Effect 6]

For causing both platinum and iridium to be supported on the inorganic oxide support, any of various known methods can be employed for this supporting. However, in the respects of the number of manufacturing steps and costs, the impregnation method is preferred and has been in common use. Further, through a post treatment in the impregnation method, the materials supported on the inorganic oxide per se, will be converted into platinum metal and iridium metal via a thermal decomposition, a hydrazine reduction, etc. In the case of the present disclosure, platinum and iridium need to be supported. Therefore, hydrazine reduction is preferred since such post treatment should be conducted under a reducing atmosphere and produced fine particles should be dispersed with maintaining their fineness without coagulation/growth thereof.

Here, in the impregnation method, the substrate is impregnated with an aqueous solution of the materials to be supported and after drying and also sintering thereof when needed, the materials to be supported are supported on the substrate. With this impregnation method, the inorganic oxide employed as the substrate does not change after the impregnation, whereas the forms of the materials to be supported does change between the form of aqueous solution and the supported form. In the case of this disclosure, platinum and iridium are impregnated in the form of salts thereof and need to be supported in the metal forms thereof. In the case of precious metal salt, it is known that the salt can exist stably in the form of aqueous solution, but on the surface of support, it will be thermally decomposed to be rendered into fine metal particles.

However, the reaction on the support surface will differ, depending on support conditions such as a temperature, a concentration, etc. Thus, after implementation of the impregnation method described above, some of the supported metals can sometimes be supported in the form of oxide or salt. Further, in the course of change from the form of aqueous solution to fine particles with evaporation of water thereof, the particles can become larger through coagulation, so that the surface area per unit metal amount can become smaller. With this, there arises possibility of reduction in the catalytic activity of the active metal (platinum and iridium).

In the above regard, if a liquid phase reduction treatment is effected with hydrazine after platinum salt and iridium salt are impregnated in the inorganic oxide support, the platinum salt and the iridium salt will be converted into platinum and iridium respectively through the liquid phase reduction treatment, so they will be formed into fine particles speedily without such coagulation and will be supported on the inorganic oxide support in dispersion. Therefore, finer platinum and iridium will be supported in good dispersion on the inorganic oxide support. Consequently, platinum and iridium can be supported under extremely active states thereof, so that the resultant reforming catalyst for hydrocarbons can have high activity.

### [Configuration 7]

Further, a reforming catalyst for hydrocarbons can be manufactured by causing platinum salt and iridium salt to be impregnated in an organic oxide support and then dried and sintered for platinum and iridium to be supported on the inorganic oxide support.

### [Function/Effect 7]

With the above-described method of manufacture, the respective metal components can be supported on an inorganic oxide support in a relatively convenient manner, so that the reforming catalyst can be manufactured efficiently.

### [Configuration 8]

Further, in case the inorganic oxide support is caused to contain a lanthanide oxide component, it is possible for this inorganic oxide support per se to contain the lanthanide oxide component. However, in case α-alumina, zirconia, etc. having high activity is selected as the substrate for the hydrocarbon reforming catalyst, through impregnation of a lanthanide salt in this inorganic oxide substrate by the impregnation technique, an inorganic oxide support containing the lanthanide oxide component can be readily obtained.

### Effects of Disclosure

Therefore, since the reforming catalyst for hydrocarbons according to this disclosure has high methane conversion and high sulfur resistance, the catalyst can achieve high methane conversion for an extended period even when a sulfur-containing hydrocarbon is employed as a raw material gas. Also, as this catalyst can maintain such high methane conversion for an extended period, the amount of catalyst to be used for e.g. hydrogen production process can be set small. So that, through reduction of the amount of catalyst used, compactization of a hydrogen-containing gas production device for use in the hydrogen production process is made possible and reduction of catalyst cost is made possible as well.

### Embodiments

Next, reforming catalysts for hydrocarbons relating to this disclosure will be shown.

In the following, steam reforming and autothermal reforming will be explained one after another in this mentioned order, with reference to specific examples and comparison examples thereof.

### [Steam Reforming]

A steam reforming catalyst for hydrocarbons according to the present disclosure comprises platinum and iridium supported on an inorganic oxide support.

In the above, as the inorganic oxide substrate, selection thereof can be made from α-alumina, γ-alumina, zirconia, titania and mixtures thereof. Incidentally, in the following examples, α-alumina and zirconia will be detailed. It is understood however, that the present disclosure is not limited thereto.

Relative to the inorganic oxide support, platinum can be supported by from 0.5 mass% to 2 mass%. Also, relative to the inorganic oxide support, iridium can be supported by from 0.5 mass% to 2 mass%. Referring to these ratios, with supporting of platinum : iridium = 1 : 4∼4 : 1, it can be expected that a sufficiently high methane conversion and a sufficiently high sulfur resistance can be provided in compatibility with each other. Incidentally, in the following examples, there will be detailed an example of platinum : iridium = 1 : 1. It is understood however, that the present disclosure is not limited thereto.

Regarding the inorganic oxide support, it is preferred that this inorganic oxide support per se can provide high conversion and high sulfur resistance, thus high durability, in compatibility with each other. However, it is also conceivable to use a plurality of kinds of inorganic oxide compounds in combination or to cause properties of its ingredient(s) to be compensated for with addition of some other component(s) thereto. In this regard, the examples to follow showed that in this disclosure the inorganic oxide compound can achieve particularly high activity when it contains a lanthanide oxide component. Here, the lanthanide oxide component can be contained by from 0.1 mass% to 20 mass%. In the following example, there will be detailed an example in which a lanthanide oxide component is contained by 10 mass%. It is understood however that the present disclosure is not limited thereto.

Further, regarding also a method of causing the inorganic oxide support to contain the lanthanide oxide component, various known techniques can be employed. For the sake of convenience, the impregnation supporting technique can mainly be used. Further, regarding a method of causing platinum and iridium to be supported on the inorganic oxide support, with using a liquid phase reduction using hydrazine after implementation of the impregnation supporting, platinum and iridium can be supported in the form of highly active fine particles.

Next, specific examples of a steam reforming catalyst for hydrocarbons relating to this disclosure and comparison examples thereof will be shown. Incidentally, the following preferred examples will be described for the sake of illustrating the present disclosure more specifically; thus, it is understood that various modifications are possible within the scope not departing from the essence of this disclosure and the present disclosure is not limited to the following description.

### <Example 1>

Catalyst: Av (0.5 mass % of platinum - 0.5 mass % of iridium/α-alumina catalyst):
Platinum chloride-iridium chloride mixed aqueous solution: 3 mL (containing platinum and iridium by 0.05 g respectively) was impregnated entirely in 9.9 g of α-alumina as inorganic oxide support having a diameter of 3 mm. Then, this was dried for 3 hours at 80°C and then subjected to soaking in 0.375N -NaOH aqueous solution for 20 hours. Then, a liquid phase reduction treatment with 1% hydrazine aqueous solution was effected thereon. After the resultant support was washed with pure water, this was dried for 3 hours at 80°C. As a result, there was obtained a catalyst comprising 0.5 mass% of platinum and 0.5 mass% of iridium onα-alumina (referred to hereinafter as "0.5 mass% platinum - 0.5 mass% of iridium/α-alumina catalyst").

### <Comparison Example 1>

Catalyst: Bv (1 mass % of platinum /α-alumina catalyst):
Except that in this case platinum chloride aqueous solution: 3 mL (containing platinum by 0.1 g) was impregnated entirely in 9.9 g of α-alumina as inorganic oxide support having a diameter of 3 mm, with using the same technique as employed for above Example 1, there was obtained 1 mass % platinum/α-alumina catalyst.

### <Comparison Example 2>

Catalyst: Cv (1 mass % of iridium/α-alumina catalyst):
Except that in this case iridium chloride aqueous solution: 3 mL (containing iridium by 0.1 g) was impregnated entirely in 9.9 g of α-alumina as inorganic oxide support having a diameter of 3 mm, with using the same technique as employed for above Example 1, there was obtained 1 mass % iridium/α-alumina catalyst.

### <Comparison Example 3>

Catalyst: Dv (0.5 mass % of platinum - 0.5 mass % of rhodium /α-alumina catalyst):
Except that in this case platinum chloride-rhodium chloride mixed aqueous solution: 3 mL (containing platinum and rhodium by 0.05 g respectively) was impregnated entirely in 9.9 g of α-alumina as inorganic oxide support having a diameter of 3 mm, with using the same technique as employed for above Example 1, there was obtained 0. 5 mass % of platinum - 0.5 mass % of rhodium /α-alumina catalyst.

### <Comparison Example 4>

Catalyst: Ev (0.5 mass % of platinum - 0.5 mass % of ruthenium /α-alumina catalyst):
Except that in this case platinum chloride-ruthenium chloride mixed aqueous solution: 3 mL (containing platinum and ruthenium by 0.05 g respectively) was impregnated entirely in 9.9 g of α-alumina as inorganic oxide support having a diameter of 3 mm, with using the same technique as employed for above Example 1, there was obtained 0. 5 mass % of platinum - 0.5 mass % of ruthenium /α-alumina catalyst.

### <Comparison Example 5>

Catalyst: Fv (0.5 mass % of platinum - 0.5 mass % of palladium/α-alumina catalyst):
Except that in this case platinum chloride- palladium chloride mixed aqueous solution: 3 mL (containing platinum and palladium by 0.05 g respectively) was impregnated entirely in 9.9 g of α-alumina as inorganic oxide support having a diameter of 3 mm, with using the same technique as employed for above Example 1, there was obtained 0. 5 mass % of platinum - 0.5 mass % of palladium /α-alumina catalyst.

### <Example 2> (Sulfur Resistance Comparison Tests)

Using the catalysts Av-Fv obtained in the example and comparison examples above, steam reforming reactions were conducted under the following conditions.

### Catalyst volume: 2mL

reactant gas composition: 2% hydrogen, 10 volppm DMS (dimethyl sulfide), rest: methane
reactant gas flow rate: 0.4 L/min (normal state)
water: 0.8 g/min
catalyst center (target) temperature: 700°C

The methane conversions in the above are shown in Table 1 below.

methane conversion (%) = (carbon monoxide concentration + carbon dioxide concentration in produced gas) / (methane concentration + carbon monoxide concentration + carbon dioxide concentration in produced gas) x 100

**[Table 1]**

| methane conversions in sulfur resistance comparison tests (Example 2) (α-alumina support) | | | | | | | |
|---|---|---|---|---|---|---|---|
| catalyst | supported metal (mass%) | | | | | methane conversion (%) | |
| | platinum | iridium | rhodium | ruthenium | palladium | after 1hr | after 5 hrs |
| catalyst Av | 0.5 | 0.5 | - | - | - | 19 | 9 |
| catalyst Bv | 1 | | | | | 3 | 2 |
| catalyst Cv | - | 1 | - | - | - | 10 | 3 |
| catalyst Dv | 0.5 | - | 0.5 | - | - | 27 | 1 |
| catalyst Ev | 0.5 | | | 0.5 | | 40 | 1 |
| catalyst Fv | 0.5 | - | - | - | 0.5 | 11 | 3 |

With the metal concentrations being same, the catalyst Av supporting both platinum and iridium show much higher methane conversions for both at 1 hour after the reaction and 5 hours after the reaction than the catalysts Bv, Cv supporting either platinum or iridium alone. Thus, it may be said that the catalyst comprising platinum and ruthenium both supported on the inorganic oxide support has much higher resistance against sulfur component.

Further, the catalyst Dv supporting both platinum and rhodium and the catalyst Ev supporting both platinum and ruthenium showed higher methane conversions than the catalyst Av supporting both platinum and iridium at 1 hour after the reaction, but the activities thereof substantially disappeared at 5 hours after the reaction. Thus, it may be said that the catalyst supporting both platinum and iridium, in particular, has higher sulfur resistance. Whereas, as for the catalyst Fv supporting both platinum and palladium, only substantially same performance as the catalyst Cv could be obtained.

Based on the above-described results, it has become clear that the prior art has failed to study sufficiently combination of precious metals capable of achieving both methane conversion and sulfur resistance, thus concluding erroneously that the combination of precious metals cannot provide the expected result. But, it has now become clear that the combination of platinum and iridium for use in a steam reforming catalyst can achieve distinctively higher effect with respect to the methane conversion and sulfur resistance, in comparison with other combinations.

### <Example 3>

Catalyst: Gv (2 mass % of platinum - 2 mass % of iridium/α-alumina catalyst):
Platinum chloride-iridium chloride mixed aqueous solution: 3 mL (containing platinum and iridium by 0.2 g respectively) was impregnated entirely in 9.6 g of α-alumina as inorganic oxide support having a diameter of 3 mm. Then, this was dried for 3 hours at 80°C and then subjected to soaking in 0.375N -NaOH aqueous solution for 20 hours. Then, a liquid phase reduction treatment with 1% hydrazine aqueous solution was effected thereon. After the resultant support was washed with pure water, this was dried for 3 hours at 80°C. As a result, there was obtained 2 mass % of platinum - 2 mass % of iridium/α-alumina catalyst.

### <Example 4>

Catalyst: Hv (2 mass % of platinum - 2 mass % of iridium/10 mass% of cerium/α-alumina catalyst):
Cerium nitrate aqueous solution: 3 mL (containing cerium by 1g) was impregnated entirely in 9 g of α-alumina as inorganic oxide support having a diameter of 3 mm. Then, this was dried for 15 hours at 60°C and then sintered for 5 hours at 800°C, whereby 10% cerium/α-alumina catalyst was obtained. Then, platinum chloride-iridium chloride mixed aqueous solution: 3 mL (containing platinum and iridium by 0.2 g respectively) was impregnated entirely in 9.6 g of this inorganic oxide support and then dried for 3 hours at 80°C and subjected to soaking in 0.375N -NaOH aqueous solution for 20 hours. Then, a liquid phase reduction treatment with 1% hydrazine aqueous solution was effected thereon. After the resultant support was washed with pure water, this was dried for 3 hours at 80°C. As a result, there was obtained 2 mass % of platinum - 2 mass % of iridium/10 mass% of cerium/α-alumina catalyst.

### <Example 5>

Catalyst: Iv (2 mass % of platinum - 2 mass % of iridium/10 mass% of neodymium /α-alumina catalyst):
Except that in this case neodymium nitrate aqueous solution: 3 mL (containing neodymium by 1 g) was impregnated entirely in 9 g of α-alumina as inorganic oxide support having a diameter of 3 mm, with using the same technique as employed for above Example 4, there was obtained 2 mass % of platinum - 2 mass % of iridium/10 mass% of neodymium /α-alumina catalyst.

### <Example 6>

Catalyst: Jv (2 mass % of platinum - 2 mass % of iridium/10 mass% of lanthanum /α-alumina catalyst):
Except that in this case lanthanum nitrate aqueous solution: 3 mL (containing lanthanum by 1 g) was impregnated entirely in 9 g of α-alumina as inorganic oxide support having a diameter of 3 mm, with using the same technique as employed for above Example 4, there was obtained 2 mass % of platinum - 2 mass % of iridium/10 mass% of lanthanum /α-alumina catalyst.

### <Example 7>

### Sulfur Resistance Comparison Tests

Using the catalysts Gv, Hv, Iv and Jv obtained in the examples above, steam reforming reactions were conducted under the following conditions.

The methane conversions in the above are shown in Table 2 below.

**[Table 2]**

| methane conversions in sulfur resistance comparison tests (Example 7) (α-alumina support) | | | | | | | |
|---|---|---|---|---|---|---|---|
| catalyst | supported metal (mass%) | | | | | methane conversion (%) | |
| | platinum | iridium | cerium | neodymium | lanthanum | after 1hr | after 5 hrs |
| catalyst Gv | 2 | 2 | - | - | - | 46 | 34 |
| catalyst Hv | 2 | 2 | 10 | - | - | 65 | 51 |
| catalyst Iv | 2 | 2 | - | 10 | - | 74 | 65 |
| catalyst Jv | 2 | 2 | - | - | 10 | 74 | 63 |

The catalysts Hv, Iv, Jv using the α-alumina supports (lanthanoid/α-alumina supports) modified with cerium, neodymium or lanthanum show higher methane conversions than the catalyst Gv using simply α-alumina. Thus, it may be said that modification with lanthanoid elements achieve even higher sulfur resistance in comparison with the case using α-alumina.

### <Example 8>

Catalyst: Kv (2 mass % of platinum - 2 mass % of iridium/zirconia catalyst):
Platinum chloride and iridium chloride mixed aqueous solution: 3 mL (containing platinum and iridium by 0.2g respectively) was impregnated entirely in 9.6 g of zirconia as inorganic oxide support having a diameter of 3 mm. Then, this was dried for 3 hours at 80°C and then subjected to soaking in 0.375N -NaOH aqueous solution for 20 hours. Then, a liquid phase reduction treatment with 1% hydrazine aqueous solution was effected thereon. After the resultant support was washed with pure water, this was dried for 3 hours at 80°C. As a result, there was obtained 2 mass % of platinum - 2 mass % of iridium/zirconia catalyst.

### <Example 9>

### Sulfur Resistance Comparison Tests

Using the catalyst Kv obtained in the example above, steam reforming reaction was conducted under the same conditions as Example 2.

The methane conversions in the above are shown in Table 3 below.

**[Table 3]**

| methane conversions in sulfur resistance comparison tests (Example 9) (zirconia support) | | | | |
|---|---|---|---|---|
| methane conversions in sulfur resistance comparison tests (Example 7) (α-alumina) | | | | |
| catalyst | supported metal (mass%) | | methane conversion (%) | |
| | platinum | iridium | after 1hr | after 5 hrs |
| catalyst Kv | 2 | 2 | 82 | 73 |

As high methane conversion was obtained with the platinum-iridium/zirconia catalyst Kv too, it may be understood that sulfur resistance can be increased also with using a zirconia support instead of α-alumina support. Further, in this case, it may also be understood that an even higher methane conversion was obtained in the case of using the zirconia support (Kv) instead of α-alumina support (Gv).

### <Example 10>

Catalyst: Lv (0.5 mass % of platinum - 0.5 mass % of iridium/zirconia catalyst):
Diammine dinitro platinum and iridium nitrate mixed aqueous solution: 4 mL (containing platinum and iridium by 0.05 g respectively) was impregnated entirely in 9.9 g of zirconia support as inorganic oxide support having a diameter of 3 mm. Then, this was dried for 3 hours at 80°C and then sintered in the air for 2 hours at 450°C, whereby 0.5 mass % of platinum - 0.5 mass % of iridium/zirconia catalyst was obtained.

### <Comparison Example 6>

Catalyst: Mv (1 mass % of platinum/zirconia catalyst):
Except that in this case diammine dinitro platinum aqueous solution: 4 mL (containing platinum by 0.1 g) was impregnated entirely in 9.9 g of zirconia support as inorganic oxide support having a diameter of 3 mm, with using the same technique as employed for above Example 10, there was obtained 1 mass % of platinum/zirconia catalyst.

### <Comparison Example 7>

Catalyst: Nv (1 mass % of iridium/zirconia catalyst):
Except that in this case iridium nitrate aqueous solution: 4 mL (containing iridium by 0.1 g) was impregnated entirely in 9.9 g of zirconia support as inorganic oxide support having a diameter of 3 mm, with using the same technique as employed for above Example 10, there was obtained 1 mass % of iridium/zirconia catalyst.

### <Example 11>

### Sulfur Resistance Comparison Tests

Using the catalysts Lv, Mv and Nv obtained in the example and comparison examples above, steam reforming reactions were conducted under the following conditions.

### Catalyst volume: 5 mL

city gas composition: methane 88.9 vol.%, ethane 6.8 vol.%, propane 3.1 vol.%, butane 1.2 vol.%, dimethyl sulfide 2.5 volppm, tert-butylmercaptan 1.7 volppm
city gas flow rate: 1L/min (normal state)
hydrogen flow rate: 0.02 L /min (normal state)
water: 2.5 g/min
catalyst inlet and outlet temperature: 660°C

The methane conversions in the above are shown in Table 4 below.
methane conversion (%) = (carbon monoxide concentration + carbon dioxide concentration in produced gas) / (methane concentration concentration + carbon monoxide concentration+ carbon dioxide concentration + ethane concentration x 2 + propane concentration x 3 + butane concentration x 4 in produced gas)

**[Table 4]**

| methane conversions in sulfur resistance comparison tests (Example 11) (zirconia support) | | | | |
|---|---|---|---|---|
| catalyst | supported metal (mass%) | | methane conversion (%) | |
| | platinum | iridium | after 1hr | after 5 hrs |
| catalyst Lv (Example 10) | 0.5 | 0.5 | 26 | 21 |
| catalyst Mv (Comparison Example 6) | 1 | - | 20 | 15 |
| catalyst Nv (Comparison Example 7) | - | 1 | 23 | 17 |

### Incidentally, testing conditions differ between Example 11 and Examples 2, 9.

From Table 4, it may be understood that by a manufacturing method different from the above-described manufacturing method, such as a method of supporting platinum and iridium on an inorganic oxide support by impregnating platinum salt and iridium salt in an inorganic oxide support and then drying and sintering the resultant support, a steam reforming catalyst having a high sulfur resistance like Example 2 is obtained.

Incidentally, if drying and sintering are effected for supporting after impregnating platinum salt and iridium salt in an inorganic oxide support by the impregnation method, preferably, the drying temperature is set to 60°C to 150°C, the drying period is set to from 1 hour to 24 hours, a sintering temperature is set to from 300°C to 700°C, and a sintering period is set to from 1 hour to 24 hours.

### <Example 12>

Catalyst: Ov (1 mass % of platinum -1 mass % of iridium/titania catalyst):
Diammine dinitro platinum and iridium nitrate mixed aqueous solution: 4 mL (containing platinum and iridium by 0.1 g respectively) was impregnated entirely in 9.8 g of titania support (Anatase) as inorganic oxide support having a diameter of 3 mm. Then, this was dried for 3 hours at 80°C and then sintered in the air for 2 hours at 450°C, whereby 1 mass % of platinum -1 mass % of iridium/zirconia catalyst was obtained.

### <Comparison Example 6>

### Catalyst: Pv (2 mass % of platinum/ titania catalyst):

Except that in this case diammine dinitro platinum aqueous solution: 4 mL (containing platinum by 0.2 g) was impregnated entirely in 9.8 g of titania support (Anatase) as inorganic oxide support having a diameter of 3 mm, with using the same technique as employed for above Example 12, there was obtained 2 mass % platinum/zirconia catalyst.

### <Comparison Example 7>

### Catalyst: Qv (2 mass % of iridium/ titania catalyst):

Except that in this case iridium nitrate aqueous solution: 4 mL (containing platinum by 0.2 g) was impregnated entirely in 9.8 g of titania support (Anatase) as inorganic oxide support having a diameter of 3 mm, with using the same technique as employed for above Example 12, there was obtained 2 mass % iridium/zirconia catalyst.

### <Example 13>

### Sulfur Resistance Comparison Tests

Using the catalysts Ov, Pv and Qv obtained in the examples above, steam reforming reactions were conducted under the same conditions as Example 11.

The methane conversions in the above are shown in Table 5 below.

**[Table 5]**

| methane conversions in sulfur resistance comparison tests (Example 13) (titania support) | | | | |
|---|---|---|---|---|
| catalyst | supported m etal (mass %) | | methane co nversion (%) | |
| | platinum | iridium | after 1 hr | after 5 hrs |
| Catalyst Ov (Example 12) | 1 | 1 | 22 | 19 |
| Catalyst Pv (Comparison Example 8) | 2 | - | 19 | 15 |
| Catalyst Qv (Comparison Example 9) | - | 2 | 21 | 15 |

From Table 8, as platinum-iridium/titania catalyst Ov also achieves high methane conversion, it may be understood that like α-alumina support (Av), with use of titania catalyst (Ov) too, the resistance against sulfur component can be enhanced.

### [Autothermal Reforming]

An autothermal reforming catalyst for hydrocarbons according to the present disclosure also comprises platinum and iridium supported on an inorganic oxide support.

In the above, as the inorganic oxide substrate, selection thereof can be made from alumina such as α-alumina, γ-alumina, silica, zirconia, titania and mixtures thereof. Incidentally, in the following examples, α-alumina, zirconia and titania will be detailed. It is understood however, that the present disclosure is not limited thereto.

Relative to the inorganic oxide support, platinum can be supported by from 0.5 mass% to 2 mass%. Also, relative to the inorganic oxide support, iridium can be supported by from 0.5 mass% to 2 mass%. Referring to these ratios, with supporting of platinum : iridium = 1 : 4∼4 : 1, it can be expected that a sufficiently high methane conversion and a sufficiently high sulfur resistance can be provided in compatibility with each other. Incidentally, in the following examples, there will be detailed an example of platinum : iridium = 1 : 1. It is understood however, that the present disclosure is not limited thereto.

Next, specific examples of an autothermal reforming catalyst for hydrocarbons relating to this disclosure and comparison examples thereof will be shown. Incidentally, the following preferred examples will be described for the sake of illustrating the present disclosure more specifically. It is understood that various modifications are possible within the scope not departing from the essence of this disclosure and the present disclosure is not limited to the following description.

### <Example 21>

### Catalyst: Ao (1 mass % of platinum - 1 mass % of iridium/zirconia catalyst):

Diammine dinitro platinum and iridium nitrate mixed aqueous solution: 4 mL (containing platinum and iridium by 0.1 g respectively) was impregnated entirely in 9.8 g of zirconia as inorganic oxide support having a diameter of 3 mm. Then, this was dried for 3 hours at 80°C and then sintered in the air for 2 hours at 450°C. As a result, there was obtained a catalyst comprising 1 mass% of platinum and 1 mass% of iridium on a zirconia support (referred to hereinafter as "1 mass% platinum - 1 mass% of iridium/zirconia catalyst").

### <Comparison Example 21>

### Catalyst: Bo (2 mass % of platinum /zirconia catalyst):

Except that in this case diammine dinitro platinum aqueous solution: 4 mL (containing platinum by 0.2 g) was impregnated entirely in 9.8 g of zirconia support as inorganic oxide support having a diameter of 3 mm, with using the same technique as employed for above Example 1, there was obtained 1 mass % of platinum /zirconia catalyst.

### <Comparison Example 22>

### Catalyst: Co (2 mass % of iridium/zirconia catalyst):

Except that in this case iridium nitrate aqueous solution: 4 mL (containing iridium by 0.2 g) was impregnated entirely in 9.8 g of zirconia support as inorganic oxide support having a diameter of 3 mm, with using the same technique as employed for above Example 1, there was obtained 2 mass % of iridium /zirconia catalyst.

### <Example 22>

### Sulfur Resistance Comparison Tests

Using the catalysts Ao, Bo and Co obtained in the example and comparison examples above, autothermal reforming reactions were conducted under the following conditions.

### Catalyst volume: 5 mL

city gas composition: methane 88.9 vol.%, ethane 6.8 vol.%, propane 3.1 vol.%, butane 1.2 vol.%, dimethyl sulfide 2.5 volppm, tertiary-butylmercaptan 1.7 volppm
city gas rate: 1L/min (standard condition)
hydrogen rate: 0.02 L /min (standard condition)
water: 2.5 g/min
catalyst inlet and outlet temperature: 660°C

The methane conversions in the above are shown in Table 6 below.
Incidentally, dimethyl sulfide and tertiary-butylmercaptan cited above are sulfur compounds having the possibility of catalyst poisoning.

**[Table 6]**

| methane conversions in reaction test (Example 22) (zirconia support) | | | | | |
|---|---|---|---|---|---|
| | supported metal (mass%) | | methane conversion (%) | | (1) - (2) |
| | platinum | iridium | (1) immediately after start | (2) after 5 hrs | |
| Catalyst Ao (Example 21) | 1 | 1 | 48 | 36 | 12 |
| Catalyst Bo (Comparison Example 21) | 2 | - | 48 | 34 | 14 |
| Catalyst Co (Comparison Example 22) | - | 2 | 51 | 36 | 15 |

From Table 6, the following observations are made. With the metal concentrations being same, the catalyst Ao supporting both platinum and iridium show much higher methane conversions even at 5 hours after the reaction than the catalysts Bo, Co supporting either platinum or iridium alone and show smaller reductions in methane conversion ((1) - (2)), thus having high sulfur resistance in the autothermal reaction of hydrocarbons. And, it was possible to confirm that in this case, a particularly high methane conversion was obtained in comparison with examples of using other supports to be described later.

### <Example 23>

### Catalyst: Do (1 mass % of platinum - 1 mass % of iridium/titania catalyst):

Diammine dinitro platinum and iridium nitrate mixed aqueous solution: 4 mL (containing platinum and iridium by 0.1 g respectively) was impregnated entirely in 9.8 g of titania support (Anatase) as inorganic oxide support having a diameter of 3 mm. Then, this was dried for 3 hours at 80°C and then sintered in the air for 2 hours at 450°C, whereby 1 mass % of platinum -1 mass % of iridium/zirconia catalyst was obtained. This catalyst is same as the catalyst Ov in Example 12.

### <Comparison Example 23>

### Catalyst: Eo (2 mass % of platinum/ titania catalyst):

Except that in this case diammine dinitro platinum aqueous solution: 4 mL (containing platinum by 0.2 g) was impregnated entirely in 9.8 g of titania support (Anatase) as inorganic oxide support having a diameter of 3 mm, with using the same technique as employed for above Example 3, there was obtained 2 mass % platinum/zirconia catalyst. This catalyst is same as the catalyst Pv in Comparison Example 6.

### <Comparison Example 24>

### Catalyst: Fo (2 mass % of iridium/ titania catalyst):

Except that in this case iridium nitrate aqueous solution: 4 mL (containing platinum by 0.2 g) was impregnated entirely in 9.8 g of titania support (Anatase) as inorganic oxide support having a diameter of 3 mm, with using the same technique as employed for above Example 3, there was obtained 2 mass % iridium/zirconia catalyst. This catalyst is same as the catalyst Qv in Comparison Example 7.

### <Example 24>

### Sulfur Resistance Comparison Tests

Using the catalysts Do, Eo and Fo obtained in the examples above, autothermal reforming reactions were conducted under the same conditions as Example 22.

The methane conversions in the above are shown in Table 7 below.

**[Table 7]**

| methane conversions in reaction test (Example 24) (titania support) | | | | | |
|---|---|---|---|---|---|
| | supported metal (mass%) | | methane conversion (%) | | (1) - (2) |
| | platinum | iridium | (1) immediately after start | (2) after 5 hrs | |
| Catalyst Do (Example 23) | 1 | 1 | 28 | 24 | 4 |
| Catalyst Eo (Comparison Example 23) | 2 | - | 29 | 24 | 5 |
| Catalyst Fo (Comparison Example 24) | - | 2 | 31 | 21 | 10 |

From Table 7, it is understood that even with change of the autothermal reforming support to titania (Example 23), reduction in the methane conversion ((1) - (2)) was small, like the zirconia support (Example 21), thus having high sulfur resistance in the autothermal reaction of hydrocarbons.

### <Example 25>

### Catalyst: Go (1 mass % of platinum - 1 mass % of iridium/α-alumina catalyst):

Diammine dinitro platinum and iridium nitrate mixed aqueous solution: 3 mL (containing platinum and iridium by 0.1 g respectively) was impregnated entirely in 9.8 g of α-alumina support as inorganic oxide support having a diameter of 3 mm. Then, this was dried for 3 hours at 80°C and then sintered in the air for 2 hours at 450°C, whereby 1 mass % of platinum - 1 mass % of iridium/zirconia catalyst was obtained.

### <Comparison Example 25>

### Catalyst: Ho (2 mass % of platinum/α-alumina catalyst):

Except that in this case diammine dinitro platinum aqueous solution: 4 mL (containing platinum by 0.2 g) was impregnated entirely in 9.8 g of α-alumina support as inorganic oxide support having a diameter of 3 mm, with using the same technique as employed for above Example 3, there was obtained 2 mass % of platinum/zirconia catalyst.

### <Comparison Example 26>

### Catalyst: Io (2 mass % of iridium /α-alumina catalyst):

Except that in this case iridium nitrate aqueous solution: 3 mL (containing iridium by 0.2 g) was impregnated entirely in 9.8 g of α-alumina support as inorganic oxide support having a diameter of 3 mm, with using the same technique as employed for above Example 5, there was obtained 2 mass % of iridium/zirconia catalyst.

### <Example 26>

### Sulfur Resistance Comparison Tests

Using the catalysts Go, Ho and Io obtained in the examples above, autothermal reforming reactions were conducted under the same conditions as Example 22.

The methane conversions in the above are shown in Table 8 below.

**[Table 8]**

| methane conversions in reaction test (Example 26) (α-alumina support) | | | | | |
|---|---|---|---|---|---|
| | supported metal (mass%) | | methane conversion (%) | | (1) - (2) |
| | platinum | iridium | (1) immediately after start | (2) after 5 hrs | |
| Catalyst Go (Example 25) | 1 | 1 | 40 | 20 | 20 |
| Catalyst Ho (Comparison Example 25) | 2 | - | 45 | 23 | 22 |
| Catalyst Io (Comparison Example 26) | - | 2 | 49 | 22 | 27 |

From Table 8, it is understood that even with change of the autothermal reforming support to α-alumina (Example 25), reduction in the methane conversion ((1) - (2)) was small, like the zirconia support (Example 21), thus having high sulfur resistance in the autothermal reaction of hydrocarbons.

### <Example 27>

### Catalyst: Jo (0. 5 mass % of platinum - 0.5 mass % of iridium/α-alumina catalyst):

Platinum chloride-iridium chloride mixed aqueous solution: 3 mL (containing platinum and iridium by 0.05 g respectively) was impregnated entirely in 9.9 g of α-alumina as inorganic oxide support having a diameter of 3 mm. Then, this was dried for 3 hours at 80°C and then subjected to soaking in 0.375N -NaOH aqueous solution for 20 hours. Then, a liquid phase reduction treatment with 1% hydrazine aqueous solution was effected thereon. After the resultant support was washed with pure water, this was dried for 3 hours at 80°C. As a result, there was obtained a catalyst comprising 0.5 mass% of platinum and 0.5 mass% of iridium on α-alumina (referred to hereinafter as "0.5 mass% platinum - 0.5 mass% of iridium/α-alumina catalyst"). This catalyst is same as the catalyst Av in Example 1.

### <Comparison Example 27>

### Catalyst: Ko (1 mass % of platinum /α-alumina catalyst):

Except that in this case diammine dinitro platinum aqueous solution: 3 mL (containing platinum by 0.1 g) was impregnated entirely in 9.9 g of α-alumina as inorganic oxide support having a diameter of 3 mm, with using the same technique as employed for above Example 27, there was obtained 1 mass % platinum/zirconia catalyst. This catalyst is same as the catalyst Bv in Comparison Example 1.

### <Comparison Example 28>

### Catalyst: Lo (1 mass % of iridium/α-alumina catalyst):

Except that in this case iridium nitrate aqueous solution: 3 mL (containing iridium by 0.1 g) was impregnated entirely in 9.9 g of α-alumina as inorganic oxide support having a diameter of 3 mm, with using the same technique as employed for above Example 27, there was obtained 1 mass % iridium/zirconia catalyst. This catalyst is same as the catalyst Cv in Comparison Example 2.

### <Example 28>

### Sulfur Resistance Comparison Tests

Using the catalysts Jo, Ko and Lo obtained in the examples above, autothermal reforming reactions were conducted under the same conditions as Example 22.

The methane conversions in the above are shown in Table 9 below.

**[Table 9]**

| methane conversions in reaction test (Example 28) (α-alumina support) | | | | | |
|---|---|---|---|---|---|
| | supported metal (mass%) | | methane conversion (%) | | (1) - (2) |
| | platinum | iridium | (1) immediately after start | (2) after 5 hrs | |
| Catalyst Jo (Example 27) | 0.5 | 0.5 | 28 | 25 | 3 |
| Catalyst Ko (Comparison Example 27) | 1 | - | 29 | 25 | 4 |
| Catalyst Lo (Comparison Example 28) | - | 1 | 27 | 14 | 13 |

As shown in Table 9, the change of autothermal catalyst manufacturing method from the impregnation method (Example 25) to the liquid phase reduction method (Example 27) resulted in achievement of extremely favorable methane conversion even with the amounts of supported metal being small and also in the reduction in the methane conversion being sufficiently small, thus high sulfur resistance in the autothermal reforming reaction for hydrocarbons. Further, based on comparison of the respective examples, it can be anticipated that with platinum and iridium, even at 2 mass % which is economically acceptable upper limit concentration, high methane conversion and high sulfur resistance can be expected.

### Industrial Applicability

The reforming catalysts for hydrocarbons provided by this disclosure have both high methane conversion and high sulfur resistance, thus being suitably used in a hydrogen manufacturing process using hydrocarbons containing sulfur component such as city gas or the like as raw material.

## Claims

1. A reforming catalyst for hydrocarbons comprising both platinum and iridium supported on an inorganic oxide support.

2. The reforming catalyst for hydrocarbons according to claim 1, wherein the inorganic oxide support contains as its principal component, one or more kinds selected from the group consisting of α-alumina, zirconia and titania.

3. The reforming catalyst for hydrocarbons according to claim 1 or 2, wherein relative to the inorganic oxide support, platinum is supported from 0.5 mass % to 2 mass %.

4. The reforming catalyst for hydrocarbons according to any one of claims 1-3,wherein relative to the inorganic oxide support, iridium is supported from 0.5 mass % to 2 mass %.

5. The reforming catalyst for hydrocarbons according to any one of claims 1-4, wherein the inorganic oxide support contains a lanthanide oxide component.

6. A method of manufacturing a steam reforming catalyst for hydrocarbons according to any one of claims 1-5, wherein after platinum salt and iridium salt are impregnated in an inorganic oxide support, the resultant mixture is subjected to a liquid-phase reducing treatment with hydrazine, thereby to cause platinum and iridium to be supported on the inorganic oxide support.

7. A method of manufacturing a steam reforming catalyst for hydrocarbons according to any one of claims 1-5, wherein platinum salt and iridium salt are impregnated in an organic oxide support and then dried and sintered for platinum and iridium to be supported on the inorganic oxide support.

8. The method of manufacturing a steam reforming catalyst for hydrocarbons according to claim 6 or 7, wherein the inorganic oxide support is obtained by impregnating a lanthanide salt in an inorganic oxide substrate.

9. A steam reforming method wherein a produced gas containing hydrogen and carbon monoxide is obtained by bringing the hydrocarbon and steam into contact with the reforming catalyst for hydrocarbons according to any one of claims 1-5.

10. An autothermal reforming method wherein a produced gas containing hydrogen and carbon monoxide is obtained by bringing the hydrocarbon and steam into contact with the reforming catalyst for hydrocarbons according to any one of claims 1-5, thereby to cause a steam reforming reaction and a partial oxidization reaction.

## Amended claims

### Amended claims under Art. 19.1 PCT

**1.** (Amended) A hydrocarbon reforming catalyst for producing a gas containing hydrogen and carbon monoxide under contact with hydrocarbons and steam, the catalyst comprising platinum and iridium both supported on an inorganic oxide support.

**2.** The reforming catalyst for hydrocarbons according to claim 1, wherein the inorganic oxide support contains as its principal component, one or more kinds selected from the group consisting of α-alumina, zirconia and titania.

**3.** The reforming catalyst for hydrocarbons according to claim 1 or 2, wherein relative to the inorganic oxide support, platinum is supported from 0.5 mass % to 2 mass %.

**4.** The reforming catalyst for hydrocarbons according to any one of claims 1-3,wherein relative to the inorganic oxide support, iridium is supported from 0.5 mass % to 2 mass %.

**5.** The reforming catalyst for hydrocarbons according to any one of claims 1-4, wherein the inorganic oxide support contains a lanthanide oxide component.

**6.** A method of manufacturing a steam reforming catalyst for hydrocarbons according to any one of claims 1-5, wherein after platinum salt and iridium salt are impregnated in an inorganic oxide support, the resultant mixture is subjected to a liquid-phase reducing treatment with hydrazine, thereby to cause platinum and iridium to be supported on the inorganic oxide support.

**7.** A method of manufacturing a steam reforming catalyst for hydrocarbons according to any one of claims 1-5, wherein platinum salt and iridium salt are impregnated in an organic oxide support and then dried and sintered for platinum and iridium to be supported on the inorganic oxide support.

**8.** The method of manufacturing a steam reforming catalyst for hydrocarbons according to claim 6 or 7, wherein the inorganic oxide support is obtained by impregnating a lanthanide salt in an inorganic oxide substrate.

**9.** A steam reforming method wherein a produced gas containing hydrogen and carbon monoxide is obtained by bringing the hydrocarbon and steam into contact with the reforming catalyst for hydrocarbons according to any one of claims 1-5.

**10.** An autothermal reforming method wherein a produced gas containing hydrogen and carbon monoxide is obtained by bringing the hydrocarbon and steam into contact with the reforming catalyst for hydrocarbons according to any one of claims 1-5, thereby to cause a steam reforming reaction and a partial oxidization reaction.
